Europäisches Patentamt

European Patent Office

Office européen des brevets

(11) Veröffentlichungsnummer: **0 599 434 A1**

# (12) EUROPÄISCHE PATENTANMELDUNG

(21) Anmeldenummer: **93250311.3**

(22) Anmeldetag: **10.11.93**

(51) Int. Cl.5: **G08B 13/24**

(30) Priorität: **14.11.92 DE 4238951**

(43) Veröffentlichungstag der Anmeldung:
**01.06.94 Patentblatt 94/22**

(84) Benannte Vertragsstaaten:
**AT BE CH DE DK ES FR GB GR IE IT LI LU MC NL PT SE**

(71) Anmelder: **KRONE Aktiengesellschaft**
**Beeskowdamm 3-11**
**D-14167 Berlin(DE)**

(72) Erfinder: **Mucha, Hans-Karl**
**Hans-Böhm-Zeile 7**
**D-14165 Berlin(DE)**
Erfinder: **Mrozynski, Gerd, Prof. Dr.-Ing.**
**Dr. Everken Weg 15**
**D-33098 Paderborn(DE)**
Erfinder: **Muth, Karlheinz, Dipl.-Ing.**
**Im Streich 9**
**D-36124 Eichenzell(DE)**
Erfinder: **Göbel, Jürgen, Dipl.-Ing.**
**Rainstrasse 7**
**D-36151 Burghaun-Steinbach(DE)**

(54) **Verfahren und Schaltungsanordnung zur elektronischen Kennzeichnung von Gegenständen.**

(57) Aufgabe ist es, ein Verfahren und eine Schaltungsanordnung zur berührungslosen Codierung von Kennzeichnungsmitteln zu schaffen und die breite Anwendbarkeit in technischen Prozessen zu gewährleisten. Die Aufgabe wird dadurch gelöst, daß n schaltbare passive Resonatoren (1) mit den jeweils zugeordneten Detektionsfrequenzen und Burn-out-Frequenzen als Array ausgeführt werden, und daß die n Resonatoren durch Anschalten elektromagnetischer Felder mit j aus n Frequenzen gezielt berührungslos codiert werden.

FIG.1

Die Erfindung bezieht sich auf ein Verfahren zur elektronischen Kennzeichnung von Gegenständen gemäß dem Oberbegriff des Anspruches 1 und auf eine Schaltungsanordnung zur Durchführung des Verfahrens.

Es sind bereits elektronische Einrichtungen zur Kennzeichnung von Gegenständen bekannt, die zur Überwachung von Warenbewegungen in Kaufhäusern verwendet werden. Diese Einrichtungen sind an der Ware befestigt und verursachen die Abgabe eines akustischen Signals, wenn die Eingangs-/Ausgangsschleuse des Kaufhauses mit der gekennzeichneten Ware passiert wird. Im US-Patent 4 920 335 wird eine elektronische Artikel-Überwachungseinrichtung vorgeschlagen, die einen planaren Mikrowellenresonator enthält. Der Resonator (Parallel-Resonanzkreis) wird auf den zu kennzeichnenden Artikel aufgebracht.

Eine elektromagnetische Welle mit fester Frequenz ermöglicht es, die resonante Stromverteilung zu detektieren und damit gekennzeichnete Artikel von solchen ohne Kennzeichen zu unterscheiden. Das resonante Verhalten des Kennzeichens wird elektrisch dadurch abgeschaltet, daß ein zweites elektromagnetisches Feld anderer Frequenz (Burn-out-Frequenz) die Resonatorschaltung durch Leitungsunterbrechung eines Leitungs-Resonators funktionsunfähig machen soll. Das Kennzeichen verbleibt auf dem Artikel.

Nachteilig ist es bei dieser Lösung, daß nur eine einfache Entscheidung möglich ist, nämlich das Kennzeichen ist vorhanden oder ist nicht vorhanden. Es ist durch die Burn-out-Frequenz nur irreversibles Ausschalten des Resonators möglich. Dadurch ist die Anwendbarkeit der vorgeschlagenen Lösung stark eingeschränkt.

Es sind weiterhin in den DE 30 23 446 C2, DE-OS 19 05 008, US 3,752,960 Verfahren zur elektronischen Kennzeichnung von Gegenständen beschrieben, bei denen eine Mehrzahl von Resonatoren zur Codierung von Gegenständen verwendet wird. Dabei werden im wesentlichen Verfahren und Schaltungen zur Detektion codierter Resonanzkreise beschrieben. Die Lösungen sehen die Verwendung von Sendern, Wobbelgeneratoren, Phasendetektoren und dgl. vor. Die Codierung erfolgt bei diesen Lösungen nicht berührungslos, es ist der direkte Zugriff zum Objekt notwendig. Es ist mit den vorgeschlagenen Lösungen keine berührungslose Codierung passiver Schaltungsanordnungen möglich.

Bei vielen technischen Prozessen, z.B. bei der automatisierten Fertigung, der Stückgutabfertigung und -verteilung auf Umschlagplätzen des Güterverkehrs, in der Lagerhaltung, sind bei deren Ablauforganisation

- eine einfache Kennzeichnung von Gegenständen, ohne deren Veränderung selbst vorzunehmen,
- eine flexible, berührungslose Codierung des Kennzeichens, ohne direkten Zugriff auf den Gegenstand zu haben und deren problemlose Entfernung vorzunehmen und
- eine schnelle Erkennung des Codes, ohne direkten Zugriff zum Gegenstand zu haben,

erforderlich.

Die bekannten Einrichtungen erfüllen diese Forderungen nur teilweise.

Der Erfindung liegt von daher die Aufgabe zugrunde, ein Verfahren und eine Schaltungsanordnung der gattungsgemäßen Art zu schaffen, die mehrere Entscheidungungsmöglichkeiten durch eine flexible, berührungslose Codierung des Kennzeichnungsmittels ermöglicht und eine breite Anwendbarkeit in technischen Prozessen gewährleistet.

Die Aufgabe wird durch die kennzeichnenden Merkmale des Anspruches 1 gelöst.

Die Anordnung einer Vielzahl von Resonatoren in einem Array erlaubt eine flexible Codierung der Resonatoren entsprechend dem Anwendungsfall. Die mit den codierten Kennzeichen versehenen Gegenstände können berührungslos mittels elektromagnetischer Felder schnell erkannt werden, indem in einer Detektionsstation die Reaktion des codierten Kennzeichens auf ein elektromagnetisches Feld ausgewertet wird. Hierzu sind entsprechende Verfahren bekannt.

Weitere vorteilhafte Ausgestaltungen der Erfindung ergeben sich aus den Unteransprüchen.

Die Erfindung wird nachfolgend in einem Ausführungsbeispiel näher erläutert. In der zugehörigen Zeichnung zeigen:

Fig. 1    die schematische Darstellung der Zusammenschaltung eines Detektions- und eines Burn-Out-Resonators zu einem schaltbaren Resonator,

Fig. 2    die schematische Darstellung der Zusammenschaltung von n schaltbaren Resonatoren gemäß der Fig.1,

Fig. 3    die schematische Darstellung der flächenhaften Anordnung von schaltbaren Resonatoren nach der Fig.1,

Fig. 4    die schematische Darstellung der Anordnung schaltbarer Resonatoren nach der Fig.1 in Multi-Layer-Ausführung,

Fig. 5    die schematische Darstellung der Oberseite eines schaltbaren Resonators nach der Fig.1,

Fig. 6    die Schematische Darstellung der Unterseite des schaltbaren Resonators nach den Fig.1 und Fig.5 und

Fig. 7    das Ersatzschaltbild eines schaltbaren Resonators nach den Fig.1,5,6.

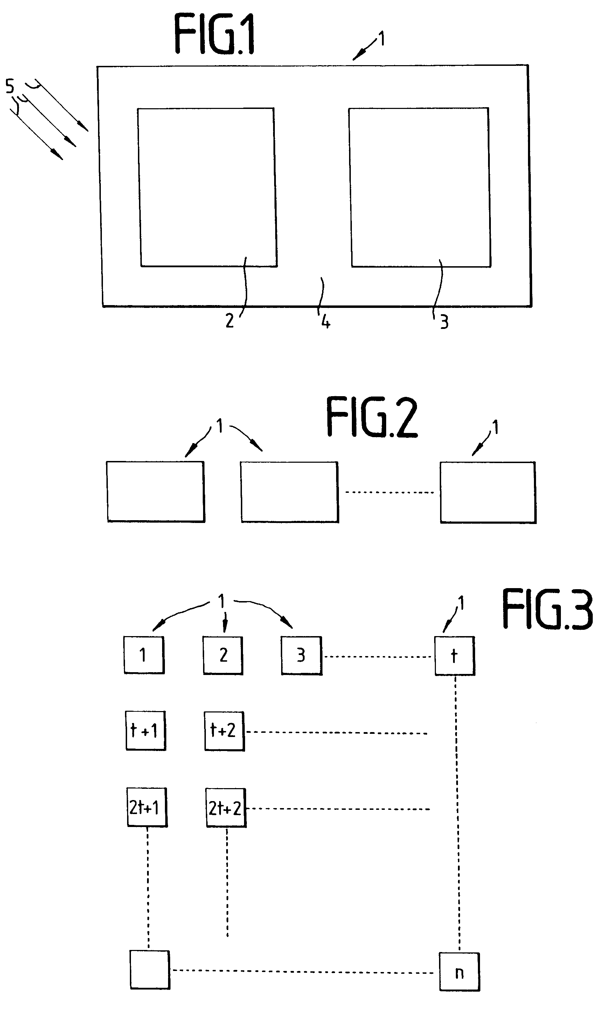

In der Figur 1 ist in schematischer Darstellung ein schaltbarer Resonator 1 gezeigt, der aus einem Detektionsresonator 2 mit der Detektionsfrequenz $f_{i1}$ und aus einem Burn-Out-Resonator 3 mit der Burn-Out-Frequenz $f_{i2}$ auf einem Schaltungsträger 4 gebildet ist. Die Detektionsfrequenz $f_{i1}$ und die Burn-Out-Frequenz $f_{i2}$ sind die Resonanzfrequenzen der jeweiligen Resonatoren 2,3.

Die Zusammenschaltung von $n \geq 2$ solcher schaltbaren Resonatoren 1 entsprechend der Fig.1 bildet eine Schaltungsanordnung zur elektronischen Kennzeichnung von Gegenständen gemäß der Fig.2, wobei $i = 1,2,3.....,n$ die Anzahl der schaltbaren Resonatoren 1 bedeutet. In der Fig.2 weisen demnach die dargestellten n schaltbaren Resonatoren 1 folgende Frequenzen auf :

Der erste schaltbare Resonator 1 hat die Resonanzfrequenzen $f_{11},f_{12}$ , der zweite schaltbare Resonator 1 hat die Resonanzfrequenzen $f_{21},f_{22}$ und der n-te schaltbare Resonator 1 weist die Resonanzfrequenzen $f_{n1},f_{n2}$ auf. Die Schaltzustände des jeweiligen schaltbaren Resonators 1 werden durch Analyse seiner Reaktion auf ein elektromagnetisches Feld 5 (Fig.1) der Detektionsfrequenz $f_{i1}$ erkannt. Eine Veränderung gegenüber dem ursprünglichen Zustand des schaltbaren Resonators 1 wird dadurch herbeigeführt, daß er einem elektromagnetischen Feld 5 der Burn-Out-Frequenz $f_{i2}$ ausgesetzt wird, welches eine irreversible Zustandsänderung des Burn-Out-Resonators 3 herbeiführt und dadurch den Detektionsresonator 2 so verändert, daß seine geänderte Reaktion auf ein einwirkendes elektromagnetisches Feld 5 der Frequenz $f_{i1}$ erkannt werden kann.

Zur berührungslosen Codierung der Anordnung aus n schaltbaren Resonatoren 1 (nach Fig.2) wird die Anordnung einem elektromagnetischen Wechselfeld von $1 \leq j \leq n$ Frequenzen aus der Menge der Detektionsfrequenzen $f_{i1}$; $i = 1,2,3....,n$ ausgesetzt. Durch die Zustandsänderung der zugehörigen Burn-Out-Resonatoren 3 und die Änderung der zugehörigen Detektionsresonatoren 2 werden j schaltbare Resonatoren 1 in einen erkennbar anderen Schaltzustand überführt. Dadurch sind in einer Schaltungsanordnung nach Fig.2

$$\binom{n}{j} = \frac{n!}{j!\,(n-j)!}$$

unterscheidbare Zustände realisierbar und damit mit dem angegebenen Wertebereich für die Variable j

$$\sum_{j=0}^{n} \binom{n}{j} = 2^n$$

Code-Elemente realisierbar ; $j = 0$ bedeutet, daß kein Feld angelegt wird, die Anordnung der schaltbaren Resonatoren 1 verbleibt also in dem ursprünglichen Zustand .

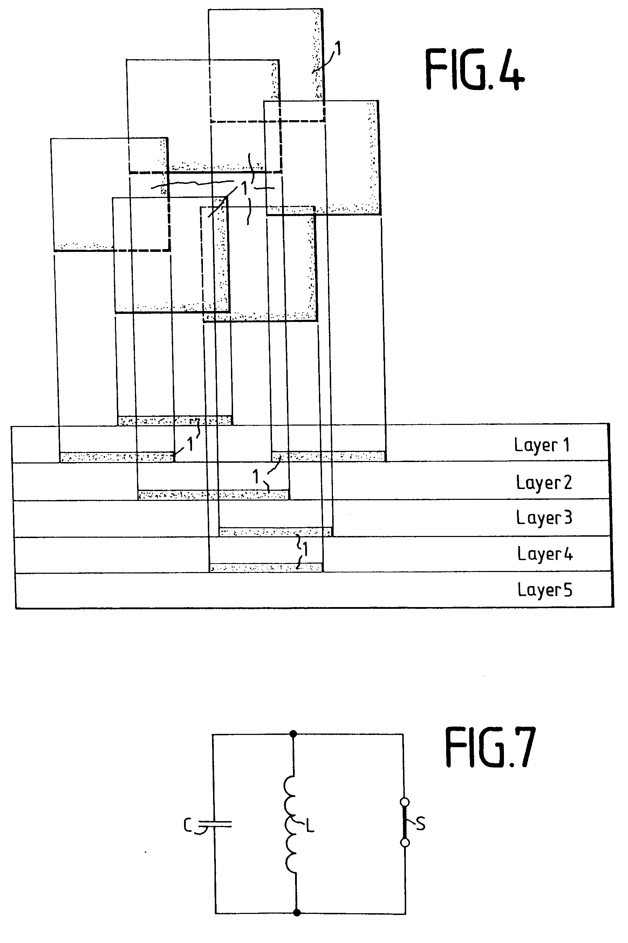

In der Fig.3 ist eine Schaltungsanordnung aus einer Vielzahl linien- oder flächenhaft aufgebrachter schaltbarer Resonatoren 1 auf einem Schaltungsträger 4 dargestellt. Um den Flächenbedarf möglichst gering zu halten, kann eine Vielzahl von schaltbaren Resonatoren 1 auch in Multi-Layer-Anordnung mit mindestens teilweise flächenhafter Überdeckung ausgeführt werden (Fig.4).

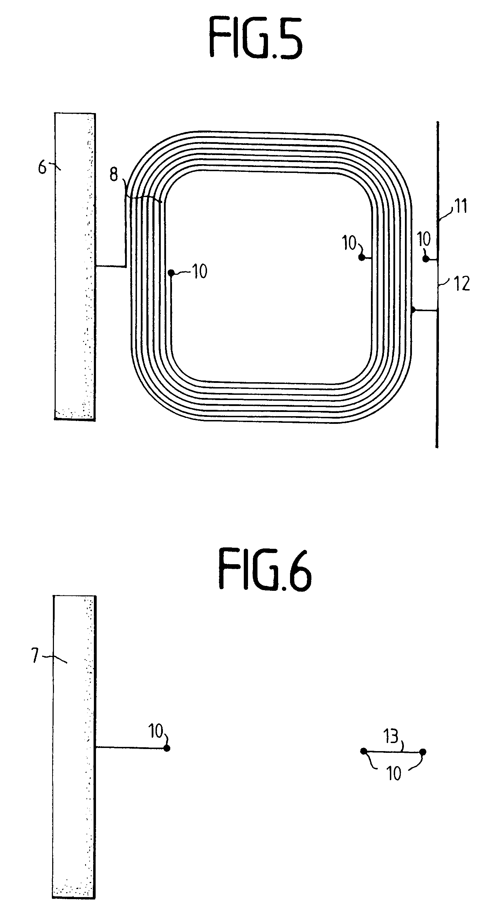

In der Fig.5 ist die Oberseite und in der Fig.6 ist die Unterseite des schaltbaren Resonators 1 dargestellt, der als gedruckte Schaltung auf der Oberfläche eines Schaltungsträgers 4 aus dielektrischem Material ausgeführt ist. Der Detektionsresonator 2 besteht aus einer Spule 8 und aus einem Kondensator, dessen Beläge 6,7 auf der Oberseite und der Unterseite des Schaltungsträgers 4 aufgebracht sind. An den Stellen 10 ist der Schaltungsträger 4 durchkontaktiert und stellt damit eine Verbindung zwischen dem Spulenende auf der Oberseite und dem Kondensatorbelag 7 auf der Unterseite her. Die Spule 8 und der Kondensator aus den Belägen 6,7 bilden damit den Detektions-Parallelresonanzkreis. Weiterhin befinden sich auf dem Schaltungsträger 4 der Burn-Out-Resonator 3, der als planarer $\lambda/2$-Dipol 11, beispielsweise als dünne leitende Folie der Länge $\lambda/2$ ausgeführt ist, wobei $\lambda$ die Wellenlänge der elektromagnetischen Welle ist, mit der dieser Burn-Out-Resonator 3 in seiner Funktion geändert wird. Die Folie, die den planaren $\lambda/2$-Burn-Out-Resonator 3 bildet, ist an der Stelle 12 des maximalen Strombelages so verengt, daß bei einer Anregung mit einer elektromagnetischen Welle der Frequenz des Burn-Out-Resonators 3 die Folie an dieser Stelle 12 wegen der hohen Stromdichte durchbrennt. Dadurch, daß der schaltbare Resonator 1 an den Stellen 10 durchkontaktiert ist, wird der Kurzschluß der Spule 8 über die Brücke 13 aufgehoben und somit die Parallelschaltung aus Spule 8 und Kondensator als Detektions-Parallelresonanzkreis wirksam.

In der Fig. 7 ist ein Ersatzschaltbild für einen schaltbaren Resonator 1 mit einer Induktivität L, die der Spule 8 in der Fig.5 entspricht, und einer Kapazität C , die den Kondensatorbelägen 6,7 in den Fig.5,6 entspricht, des Detektions-Parallelresonanzkreises und mit einem Schaltelement S, gebildet durch die Burn-Out-Stelle 12 in der Mitte des planaren λ/2-Burn-Out-Resonators 3 (Fig.5), gezeigt.

**BEZUGSZEICHENLISTE**

| | |
|---|---|
| 01 | schaltbarer Resonator |
| 02 | Detektionsresonator |
| 03 | Burn-Out-Resonator |
| 04 | Schaltungsträger |
| 05 | elektromagnetisches Feld |
| 06 | Kondensatorbelag |
| 07 | Kondensatorbelag |
| 08 | Spule |
| 09 | |
| 10 | Durchkontaktierungsstelle |
| 11 | λ/2-Dipol |
| 12 | Burn-Out-Stelle |
| 13 | Brücke |
| $f_{i1}$ | Detektionsfrequenzen |
| $f_{i2}$ | Burn-out-Frequenzen |
| L | Induktivität |
| C | Kapazität |
| S | Schaltelement |

**Patentansprüche**

1.  Verfahren zur elektronischen Kennzeichnung von Gegenständen mit passiven Resonatoren mittels elektromagnetischer Felder **dadurch gekennzeichnet,**
    daß n schaltbare Resonatoren (1), bestehend aus n Detektions-Resonatoren (2) mit den jeweils zugeordneten Detektionsfrequenzen $f_{i1}$ - (i = 1,2,...,n) und aus n Burn-Out-Resonatoren (3) mit den jeweils zugeordneten Burn-Out-Frequenzen $f_{i2}$ (i = 1,2,...,n) als Array angeordnet werden und daß die n Detektions-Resonatoren (2) beim Anschalten von elektromagnetischen Feldern (5) mit 1 ≦ j ≦ n aus n Burn-Out-Frequenzen $f_{i2}$ durch Zustandsänderung der Burn-Out-Resonatoren (3) berührungslos codiert werden.

2.  Verfahren nach Anspruch 1, dadurch gekennzeichnet, daß das Array aus mindestens zwei der schaltbaren Resonatoren (1) gefertigt wird, deren Bestandteile jeweils auf unterschiedliche Detektionsfrequenzen $f_{i1}$ ansprechen und die durch ihre zugehörigen Burn-Out-Resonatoren (3) ein- oder abgeschaltet werden.

3.  Schaltungsanordnung zur Durchführung des Verfahrens nach den Ansprüchen 1 und 2, dadurch gekennzeichnet, daß die n schaltbaren Resonatoren (1) in dem Array flächig und/oder in mehreren Schichten ( Multilayer ) angeordnet sind.

4.  Schaltungsanordnung nach Anspruch 3, dadurch gekennzeichnet, daß die Schaltbaren Resonatoren (1) des Arrays jeweils aus einer Zusammenschaltung von mindestens einem Detektions-Resonator (2) mit mindestens einem Burn-Out-Resonator (3) gebildet sind.

# FIG.1

5

1

2    4    3

# FIG.2

1    1

# FIG.3

1    1

| 1 | 2 | 3 | t |

| t+1 | t+2 |

| 2t+1 | 2t+2 |

| | n |

# FIG.4

| | |
|---|---|
| | Layer 1 |
| | Layer 2 |
| | Layer 3 |
| | Layer 4 |
| | Layer 5 |

# FIG.7

C   L   S

# FIG.5

# FIG.6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| X | DE-A-22 35 309 (THE NATIONAL CASH REGISTER) <br> * Seite 7, Zeile 7 - Seite 11, Zeile 7; Abbildungen 1-6 * <br> --- | 1-3 | G08B13/24 |
| X | US-A-3 780 368 (A. NORTHEVED ET AL) <br> * Spalte 8, Zeile 23 - Zeile 31; Abbildung 4 * <br> * Spalte 11, Zeile 30 - Spalte 12, Zeile 50; Abbildungen 7-14 * <br> & DE-A-21 08 082 <br> --- | 1-3 | |
| Y | GB-A-2 246 492 (CHIKARA SHIMAMURA) <br> * Seite 7, Zeile 6 - Seite 9, Zeile 11; Abbildungen 1,2 * <br> --- | 1-3 | |
| Y | FR-A-2 597 635 (LIVRATEL) <br> * Ansprüche 9,10; Abbildung 2 * <br> --- | 1-3 | |
| Y | GB-A-2 105 952 (STANDARD TELEPHONE AND CABLES) <br> * Zusammenfassung; Abbildung 3 * <br> --- | 1-3 | |
| A | CH-A-672 854 (SCANMATIC SECURITY SYSTEMS) <br> * Ansprüche 1-3; Abbildung 1 * <br> --- | 1-3 | |
| D,A | US-A-4 920 335 (G. F. ANDREWS) <br> * Zusammenfassung; Abbildungen 1,2 * <br> --- | 1-3 | |
| A | WO-A-92 05499 (K. P. JENSEN) <br> * Seite 5, Zeile 14 - Seite 6, Zeile 15; Abbildung 1 * <br> * Seite 13, Zeile 24 - Seite 14, Zeile 3 * <br> ----- | | |

**RECHERCHIERTE SACHGEBIETE (Int.Cl.5)**

G08B
G06K
G07C
G01S
B61L
G06F

Der vorliegende Recherchenbericht wurde für alle Patentansprüche erstellt

| Recherchenort | Abschlußdatum der Recherche | Prüfer |
|---|---|---|
| BERLIN | 18. Februar 1994 | Breusing, J |